# EUROPÄISCHE PATENTSCHRIFT

(11) **EP 0 902 392 B1**
(45) Veröffentlichungstag und Bekanntmachung des Hinweises auf die Patenterteilung: **19.05.2004**
(21) Anmeldenummer: 98114619.4
(22) Anmeldetag: 04.08.1998
(51) Int. Cl.: G06K 19/077, G06K 7/10

(54) **Chipkarte**
Chipcard
Carte à puce

(30) Priorität: 10.09.1997 DE 19739657
(43) Veröffentlichungstag der Anmeldung: 17.03.1999
(73) Patentinhaber: ROBERT BOSCH GMBH, 70442 Stuttgart (DE)
(72) Erfinder: Wietzke, Joachim, 31141 Hildesheim (DE); Groeger, Klaus-Erwin, 31199 Diekholzen (DE)

(56) Entgegenhaltungen:
- EP-A- 0 790 576
- DE-A- 2 443 967
- GB-A- 2 022 300
- US-A- 3 728 521
- US-A- 5 345 367

## Beschreibung

Die Erfindung betrifft eine Chipkarte, insbesondere eine Chipkarte mit Abmessungen entsprechend der ISO 7616 Norm, die auch als Keycard verwendet werden kann.

Chipkarten sind bekannt und können für vielerlei Zwecke eingesetzt werde, wie beispielsweise die bekannte Krankenkassen-Chipkarte. Dabei enthält die Chipkarte einen Mikroprozessor oder -controller, der in einem Chipmodul untergebracht ist, das an einem über die ISO-Norm 7616 festgelegten Ort der Chipkarte in einer entsprechenden Aussparung angeordnet ist. Auf der Oberseite des Chipmoduls befinden sich in bekannter Weise definierte Kontaktflächen, über die das Chipmodul mittels entsprechender Kontakte in dem Kartenleser eines elektronischen Geräts funktionell kontaktiert wird.

Die Chipkarte kann auch als sog. Keycard verwendet werden, mittels der der berechtigte Benutzer Zugang zu sonst elektronisch verschlossenen Geräten erhält oder sich gegenüber einem Gerät identifiziert. So kann mittels einer Keycard der Zugang eines Berechtigten zu einem Autoradio hergestellt werden, d.h. die Keycard erfüllt hier einerseits die Aufgabe eines Diebstahlschutzes, andererseits kann die Keycard neben dem Aufschließen des Autoradios noch vom Benutzer einmal vorgegebene Betriebsparameter einstellen, wie beispielsweise den bevorzugten Sender, die Lautstärke etc.. Zwar erhöht sich durch diese Vorauswahl, beispielsweise des bevorzugten Senders, die Sicherheit bei der Handhabung eines Autoradios, allerdings wird die Aufmerksamkeit des Benutzers beim Ändern der Einstellung des Autoradios immer noch zu sehr auf die Bedienung des Geräts gelenkt, was eine Ablenkung des Benutzers vom Verkehr darstellt und folglich eine Gefährdung bildet.

Diese Bedienzeit kann nach einer Untersuchung der Stiftung Warentest bei Autoradios bis zu 3 Sekunden betragen, was einer Strecke von ca. 80 m bei einer Geschwindigkeit von 100 km/h entspricht. Durch den Einbau einer drahtgebundenen Fernbedienungsfunktion in das Autoradio, wobei Fernbedienungselemente in der Nähe des Lenkrades angeordnet werden, kann diese Ablenkung vermindert werden.

Keycards können auch in sog. Radiophones verwendet werden, die aus einer Kombination eines Autoradios mit einem Telefongerät bestehen. Die Keycard dient zum Aufschließen des Geräts. Ferner können Telefongebühren von der Keycard abgebucht werden, die in diesem Fall die Funktion einer Telefonkarte übernimmt. Radiophones sind insbesondere für den Einsatz in Wagenflotten von Autoverleihern interessant, wo der Mieter eine im Wagen befindliche, über die Keycard zugängliche Telefonfunktion vorfindet, wobei sich das Abrechnen der angefallenen Telefongebühren des Mieters für den Autovermieter erübrigt.

Der Einsatz von Keycards ist jedoch nicht auf den Automobilsektor begrenzt. Keycards, die neben dem Aufschließen des elektronischen Geräts bzw. der Identifikation des Benutzers noch Betriebsparameter einstellen, können prinzipiell in jedem elektronischen Gerät, insbesondere Geräten der Kommunikationselektronik verwendet werden. Dies trifft auch für Kommunikationselektronik in Verbindung mit multifunktionalen Applikationen zu, wo über die Keycard beispielsweise Abrechnungen für in Anspruch genommene Dienste vorgenommen werden können.

EP-A-0 790 576 (siehe Präambel des Anspruchs 1) offenbart eine Chipkarte, bei der neben einem auf der Oberfläche der Karte angeordneten Magnetstreifen in die Karte eingebettete optische Fasern, die schmalen Längskanten der Karte miteinander verbinden, als Datenträger vorgesehen sind. Durch Ausstanzungen aus der Karte und damit Unterbrechung von Fasern können Informationen, beispielsweise ein reduziertes Guthaben im Falle einer Abrechnungskarte, auf die Karte geschrieben werden. Die Chipkarte kann weiterhin ein eingebettetes Chipmodul aufweisen.

US-A-5 345 367 offenbart eine PCMCIA-Karte zum Einstecken in eine entsprechende Kontaktierungsvorrichtung für einen PC, mit einem integrierten Schaltkreis (Chip), wobei auf einer im Inneren der Karte angeordneten Leiterplatte mindestens eine Anzeige-LED angeordnet ist, von der abgestrahltes Licht mittels eines Lichtleiters aus einer Seitenkante der Karte herausgeführt wird. Diese Anzeige-LED wird durch eine Steuerung angesteuert, die innerhalb oder alternativ außerhalb der Chipkarte angeordnet sein kann.

Die Erfindung wird durch den Gegenstand des Anspruchs 1 gekennzeichnet. Bevorzugte Ausführungsformen der Erfindung sind Gegenstand der Unteransprüche.

Erfindungsgemäß wird eine Chipkarte mit einem Chipmodul mit einer Fernbedienungsfunktion versehen, indem die Karte in der Kartenhauptebene oder parallel zu dieser lichtleitend ausgelegt ist und das Chipmodul mindestens ein Empfangselement zum Empfang des durch die lichtleitende Schicht verlaufenden Lichts aufweist. Dies kann dadurch erreicht werden, indem die Karte aus einer in der Hauptebene liegenden lichtleitenden Schicht aufgebaut ist, die von oberen und unteren Deckschichten abgedeckt ist. Die obere und untere Deckschicht ist dabei lichtundurchlässig und wird aus einem Standardkunststoffmaterial, wie beispielsweise PVC, hergestellt. Allgemein ist die Chipkarte nach dem Prinzip der Multilayer aufgebaut, d.h. sie besteht aus mehreren Kunststoffschichten (oben und unten), in die eine lichtleitende Schicht eingebettet oder laminiert ist.

Vorzugsweise kann die Lichtleitung in der lichtleitenden Schicht durch in ihr eingebettete Lichtleiter geschaffen werden, wobei die Lichtleiter durch optische Fasern, insbesondere Glasfasern, gebildet werden können.

Die Lichteinfallsebene der Chipkarte wird vorzugsweise durch die von der Aussparung für das Chipmodul entfernter liegende vordere Frontoberfläche des Chipkartenquaders gebildet.

Die Hauptrichtung der Lichtleitung verläuft im wesentlichen parallel zur Hauptsymmetrieachse des Chipkartenquaders. Dabei kann die Lichtleitung einerseits zur Aussparung für das Chipmodul hin führen, falls das Licht in das Chipmodul eingekoppelt wird; es ist andererseits jedoch auch möglich, daß die Lichtleitung an der hinteren Frontfläche des Chipquaders endet, so daß das Licht durch die Chipkarte hindurch geleitet wird und an der hinteren Frontseite austritt. Im ersten Fall weist das Chipmodul mindestens ein Empfangselement zum Empfangen des durch die Lichtleiter verlaufenden Lichts auf. Im zweiten Fall, in dem das Licht durch die Karte läuft und wieder austritt, weist das mit der Karte verbundene elektronische Gerät Empfangselemente auf.

Vorzugsweise kann die Bidirektionalität der Chipkarte hergestellt werden, indem das Chipmodul zusätzlich zu dem mindestens einen Empfangselement mindestens ein Sendeelemente zum Senden von Licht aufweist. Analoges gilt in dem Fall des Durchlaufens des Lichts durch die Chipkarte; hier weist das mit der Chipkarte verbundene Gerät Sendeelemente auf. Es ist selbstverständlich, das je nach Verwendungszweck der Chipkarte entweder die Empfangsfunktion, die Sendefunktion oder beide verwirklicht werden können.

Üblicherweise wird Infrarotlicht zum Übertragen der Informationen bzw. Daten verwendet, allerdings ist die erfindungsgemäße Chipkarte nicht auf den IR-Frequenzbereich beschränkt.

Vorzugsweise ist es daher mit der erfindungsgemäßen Chipkarte möglich, elektronische Geräte mittels der Chipkarte mit einer Fernbedienungsfunktion zu versehen, ohne daß ein separates Fernbedienungselement vorhanden ist. Mit dem Herausnehmen der Chipkarte aus dem Gerät wird i.a. wieder eine elektronische Verriegelung des Geräts bewirkt, und andererseits die Fernbedienungsfunktion entfernt, was zusätzlich zu einer Verhinderung eines Gerätemißbrauchs beiträgt.

Bei der Verwendung der erfindungsgemäßen Chipkarte mit Fernbedienungsfunktioh können vorteilhafterweise am Lenkrad eines Kraftfahrzeugs Bedienungselemente angeordnet werden, mit denen das Autoradio oder allgemeiner die automobile Kommunikationseinrichtung gesteuert werden kann. Unter automobiler Kommunikationseinrichtung sind Autoradio, Autotelefon, Navigationssystem etc. zu verstehen. Die Verbindung zwischen der Fernbedienung am Lenkrad und der Kommunikationseinrichtung erfolgt dabei drahtlos, was eine beträchtliche Vereinfachung in einem Automobil darstellt. Es müssen in dem beschränken Platz des Armaturenbretts keine zusätzlichen Leitungen vorgesehen werden, wobei bei einer drahtgestützten Anordnung der Fernbedienung am Lenkrad noch zusätzlich das Problem der Anordnung der Leitungen in einem sich drehenden Gegenstand, nämlich dem Lenkrad, auftreten würde. Ferner ist der verfügbare Platz auf der Radiofrontseite begrenzt und durch die Integration der Fernbedienungsfunktion in die Keycard wird kein zusätzlicher Platz für die Anordnung einer separaten Empfangsvorrichtung (und eventuell Sendevorrichtung) für die Fernbedienung benötigt.

Die Verwendung der Chipkarte mit Fernbedienungsfunktion ist nicht auf das Automobil eingeschränkt. Es wäre auch möglich Fernseher mit Keycards mit der Fernbedienungsfunktion zu versehen. Über eine derartige Keycard könnte beispielsweise der Zugriff von Kindern auf vorhandene Programme eingeschränkt und die Fernbedienungsfunktion mit dem Entfernen der Keycard entfernt werden, so daß ein Zugriff auf das Fernsehgerät über die Fernbedienung nicht mehr möglich ist. Ferner ist mit einer derartigen Keycard der Zugang zu Pay-TV möglich, so daß mit der Entfernung der erfindungsgemäßen Keycard kein Zugang zu derartigen Diensten mehr möglich ist.

Bevorzugte Ausführungsformen der erfindungsgemäßen Chipkarte werden nachfolgend unter Bezug auf die einzige Zeichnung erklärt.

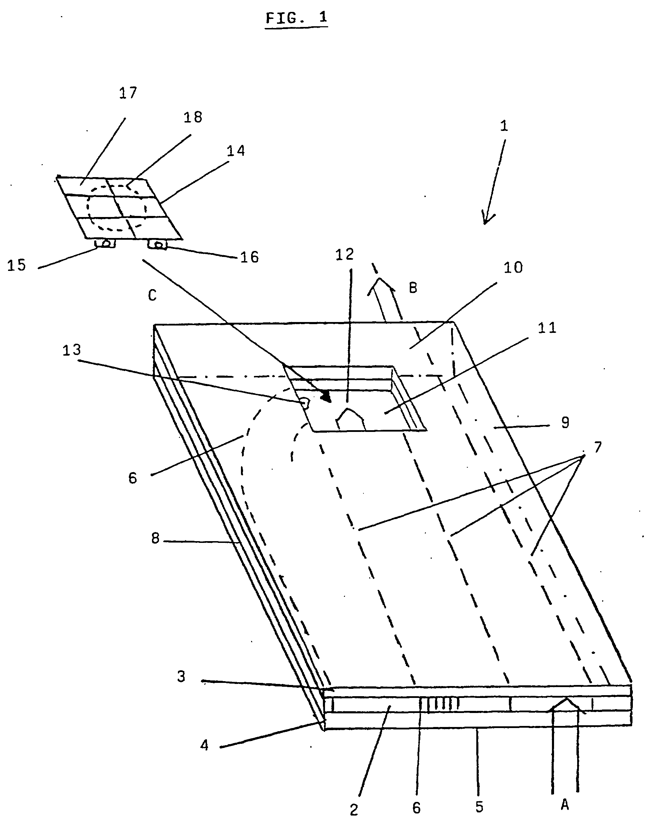

Fig. 1 zeigt eine erfindungsgemäße Chipkarte mit Fernbedienungsfunktion in perspektivischer Ansicht.

Fig. 1 zeigt eine Chipkarte 1, die eine quaderförmige Form entsprechend der Norm ISO 7616 hat. Die Chipkarte 1 umfaßt in der bevorzugten Ausführungsform eine lichtleitende Schicht 2, die von einer oberen Deckschicht 3 und einer unteren Deckschicht 4 eingeschlossen ist, so daß die lichtleitende Schicht 2 in der Hauptebene des Chipkartenquaders liegt. Die Deckschichten 3 und 4 sind i.a. bedruckbare, lichtundurchlässige Kunststoffschichten. Die vordere kleinste Frontoberfläche des Quaders der Chipkarte 1 bildet die senkrecht zur Hauptebene des Quaders stehende Lichteinfallsebene 5. Das einfallende Licht ist beispielhaft durch den Pfeil A dargestellt. In der lichtleitenden Schicht 2 wird die Lichtleitung vorzugsweise durch Lichtleiter 6 bewirkt, die durch optische Fasern, beispielsweise Glasfasern, realisiert werden, die in einer Kunststoffschicht eingelagert sind. Es ist jedoch auch möglich, die gesamte lichtleitende Schicht 2 als transparente lichtleitende Kunststoffschicht zu realisieren. Die Lichtleiter 6 sind in der Fig. 1 durch die senkrechten Striche in der lichtleitenden Schicht 2 schematisch angedeutet. Die Lichtleiter 6 verlaufen in der Faserhauptrichtung 7, d.h. senkrecht zur Lichteinfallsebene 5 und parallel zur Quaderhauptachse (mit anderen Worten parallel zu den Seitenflächen 8 und 9 des Quaders der Chipkarte 1). Die Lichtleiter 6 können Licht durch die Chipkarte 1 zu einer durch die hintere Frontfläche gebildeten Lichtausfallsebene 10 (in der perspektivischen Ansicht verdeckt) leiten. Das ausfallende Licht wird durch den Pfeil B dargestellt. Weiterhin sind die Lichtleiter 6 in der lichtleitenden Schicht 2 so angeordnet, daß sie Licht zu der Aussparung 11 für das Chipmodul leiten, wobei die Aussparung 11 näher an der Lichtausfallsebene 10 als an der Lichteinfallsebene 5 angeordnet ist. Der Lichtleiter 6 kann entweder direkt, d.h. in der Lichthauptrichtung 7, auf die Aussparung 11 auftreffen, oder, wie es im linken Teil des Quaders der Chipkarte 1 dargestellt ist, um 90° gebogen seitlich in die Aussparung 11 einmünden. Dies ist schematisch durch die zwei Pfeile in der Aussparung 11 dargestellt, die die Lichtaustritte 12 und 13 in die Aussparung 11 hinein symbolisieren. In der Aussparung 11 ist ein Chipmodul 14 angeordnet, das IR-Dioden 15 und 16 oder entsprechende LEDs zum Empfangen und Senden von Licht an entsprechend geeigneten Lokalitäten aufweist. Das Chipmodul 14 weist an seiner Oberfläche die normüblichen Kontaktflächen 17 auf, unter denen der eigentliche Mikrocontroller 18 angeordnet ist. Die Anordnung des Chipmoduls 14 ist in der Figur durch einen Pfeil C angedeutet.

In der schematischen Darstellung nach Fig. 1 sind daher zwei Ausführungsformen dargestellt:

In der ersten Ausführungsform wird das Licht gebündelt von der Lichteinfallsebene 5 in der lichtleitenden Schicht 2 zu dem nach ISO 7616 vorgesehenen Einbauort 11 des Chipmoduls 14 geleitet, wo es über die schematisch dargestellten Lichtaustritte 12 und 13 auf entsprechende Empfangselemente 15 und 16 (z.b. Infrarotdioden und/oder Verstärker/Filter) geleitet wird, die auf dem Chipmodul 14 neben dem Mikroprozessor und/oder Speicher integriert sind. Die erzeugten und verarbeiteten Signale werden über die Kontakte 17 vom Gerät (beispielsweise ein Autoradio) abgegriffen und weiterverarbeitet.

In der zweiten Ausführungsform beinhaltet die Chipkarte ebenfalls eine lichtleitende Schicht 2. Das Licht wird zusätzlich durch die Karte 1 geführt und tritt am anderen Ende der Karte 1 wieder aus. Empfangs- und oder Sendedioden werden so im Autoradio oder einem entsprechenden elektronischen Gerät angeordnet, daß im eingeschobenen Zustand der Karte 1 in das Gerät das austretende Licht die Dioden des Gerätes trifft.

## Patentansprüche

1. Chipkarte (1) mit Chipmodul (14) und einer lichtleitenden Schicht (2),
**dadurch gekennzeichnet,**
**dass** das Chipmodul (14) mindestens ein Empfangselement (15, 16) zum Empfangen des durch die lichtleitende Schicht verlaufenden Lichts aufweist.

2. Chipkarte (1) nach Anspruch 1, **dadurch gekennzeichnet, dass** die Karte in der Kartenhauptebene oder parallel zu ihr lichtleitend ist.

3. Chipkarte nach Anspruch 1 oder 2, **dadurch gekennzeichnet, daß** die lichtleitende Schicht (2) von einer oberen und unteren Deckschicht (3, 4) abgedeckt ist.

4. Chipkarte nach einem der vorstehenden Ansprüche, **dadurch gekennzeichnet, daß** die Lichtleitung in der lichtleitenden Schicht (2) durch in die lichtleitenden Schicht eingebettete Lichtleiter (6) geschaffen wird.

5. Chipkarte nach Anspruch 4, **dadurch gekennzeichnet, daß** die Lichtleiter (6) durch optische Fasern gebildet werden.

6. Chipkarte nach einem der vorangegangenen Ansprüche, **dadurch gekennzeichnet, daß** die Lichteinfallsebene (5) der Chipkarte (1) durch die von der Aussparung (11) für das Chipmodul (14) entfernter liegende vordere Frontoberfläche des Quaders der Chipkarte (1) gebildet wird.

7. Chipkarte nach Anspruch 6, **dadurch gekennzeichnet, daß** die Hauptrichtung der Lichtleitung im wesentlichen parallel zur Hauptsymmetrieachse des Quaders der Chipkarte (1) verläuft.

8. Chipkarte nach Anspruch 7, **dadurch gekennzeichnet, daß** die lichtleitende Schicht (2) das Licht (A) zur Aussparung (11) für das Chipmodul (14) führt.

9. Chipkarte nach Anspruch 7 oder 8, **dadurch gekennzeichnet, daß** die lichtleitende Schicht (2) das Licht von der Lichteinfallsebene (5) zu der als Lichtausfallsebene (10) wirkenden hinteren Frontfläche (10) der Chipkarte (1) leitet.

10. Chipkarte nach einem der Ansprüche 7 - 9, **dadurch gekennzeichnet, daß** das Chipmodul (14) mindestens ein Sendeelement (15, 16) zum Senden von Licht aufweist.

11. Chipkarte nach einem der vorangegangenen Ansprüche, **dadurch gekennzeichnet, daß** die Lichtleitung bidirektional erfolgt.

12. Chipkarte nach einem der vorangegangenen Ansprüche, **dadurch gekennzeichnet, daß** Infrarotlicht verwendet wird.

## Claims

1. Chip card (1) with a chip module (14) and a light-conducting layer (2), **characterized in that** the chip module (14) has at least one receiving element (15, 16) for receiving the light passing through the light-conducting layer.

2. Chip card (1) according to Claim 1, **characterized in that** the card is light-conducting in the principal plane of the card or parallel to it.

3. Chip card according to Claim 1 or 2, **characterized in that** the light-conducting layer (2) is covered by an upper and lower outer layer (3, 4).

4. Chip card according to one of the preceding claims, **characterized in that** the light conduction in the light-conducting layer (2) is created by light conductors (6) embedded in the light-conducting layer.

5. Chip card according to Claim 4, **characterized in that** the light conductors (6) are formed by optical fibres.

6. Chip card according to one of the preceding claims, **characterized in that** the plane of light incidence (5) of the chip card (1) is formed by the front surface of the cuboid of the chip card (1) that is remote from the recess (11) for the chip module (14).

7. Chip card according to Claim 6, **characterized in that** the main direction of the light conduction runs substantially parallel to the principal axis of symmetry of the cuboid of the chip card (1).

8. Chip card according to Claim 7, **characterized in that** the light-conducting layer (2) guides the light (A) to the recess (11) for the chip module (14).

9. Chip card according to Claim 7 or 8, **characterized in that** the light-conducting layer (2) conducts the light from the plane of light incidence (5) to the rear front face (10) of the chip card (1) acting as the plane of light emergence (10).

10. Chip card according to one of Claims 7 - 9, **characterized in that** the chip module (14) has at least one transmitting element (15, 16) for transmitting light.

11. Chip card according to one of the preceding claims, **characterized in that** the light conduction takes place bidirectionally.

12. Chip card according to one of the preceding claims, **characterized in that** infrared light is used.

## Revendications

1. Carte à puce (1) comportant une puce (14) et une couche conduisant la lumière (2),
**caractérisée en ce que**
la puce (14) présente au moins un élément de réception (15, 16) pour la réception de la lumière s'écoulant au travers de la couche conductrice de lumière.

2. Carte à puce (1) selon la revendication 1,
**caractérisée en ce que**
la carte, dans le plan principal de la carte ou parallèlement à lui, est conductrice de lumière.

3. Carte à puce selon la revendication 1 ou 2,
**caractérisée en ce que**
la couche conductrice de lumière (2) est recouverte d'une couche de couverture (3, 4) supérieure et inférieure.

4. Carte à puce selon l'une quelconque des revendications précédentes,
**caractérisée en ce que**
la conduction de la lumière dans la couche conductrice de lumière (2) est créée par des conducteurs de lumière (6) noyés dans la couche conductrice de lumière.

5. Carte à puce selon la revendication 4,
**caractérisée en ce que**
les conducteurs de lumière (6) sont formés de fibres optiques.

6. Carte à puce selon l'une quelconque des revendications précédentes,
**caractérisée en ce que**
le plan d'incidence de lumière (5) de la carte à puce (1) est formé par la surface frontale avant du parallélépipède de la carte à puce (1) éloignée du creux (11) pour la puce (14).

7. Carte à puce selon la revendication 6,
**caractérisée en ce que**
la direction principale de la conduction de lumière s'étend pour l'essentiel parallèlement à l'axe de symétrie principal du parallélépipède de la carte à puce (1).

8. Carte à puce selon la revendication 2,
**caractérisée en ce que**
la couche conductrice de lumière (2) conduit la lumière (A) vers le creux (11) pour la puce (14).

9. Carte à puce selon la revendication 7 ou 8,
**caractérisée en ce que**
la couche conductrice de lumière (2) conduit la lumière du plan d'incidence de lumière (5) vers la surface frontale arrière (10) de la carte à puce agissant en tant que plan de sortie de la lumière (10).

10. Carte à puce selon la revendication 7 à 9,
**caractérisée en ce que**
la puce (14) présente, pour émettre de la lumière, au moins un élément d'émission (15, 16).

11. Carte à puce selon l'une quelconque des revendications précédentes,
**caractérisée en ce que**
la conduction de la lumière s'effectue de manière bidirectionnelle.

12. Carte à puce selon l'une quelconque des revendications précédentes,
**caractérisée en ce que**
de la lumière infrarouge est utilisée.
